# FASCICULE DE BREVET EUROPEEN

(11) **EP 4 211 551 B1**
(45) Date de publication et mention de la délivrance du brevet: **18.12.2024**
(21) Numéro de dépôt: 21782443.2
(22) Date de dépôt: 10.09.2021
(51) Int. Cl.: G06F 8/65, B61L 27/53, B61L 23/04, H04W 8/24, H04W 84/00, H04W 84/12, H04W 88/06

(54) **PROCEDE POUR LA MISE A JOUR DE LOGICIEL EMBARQUE**
VERFAHREN ZUR AKTUALISIERUNG VON EINGEBETTETER SOFTWARE
METHOD FOR UPDATING EMBEDDED SOFTWARE

(30) Priorité: 11.09.2020 FR 2009237
(43) Date de publication de la demande: 19.07.2023
(73) Titulaire: Commissariat à l'Energie Atomique et aux Energies Alternatives, 75015 Paris (FR)
(72) Inventeur: CHAPUIS, Bastien, 73100 TRESSERVE (FR); ALBERTINI, Julien, 75017 PARIS (FR); TRESARRIEU, Alban, 78000 VERSAILLES (FR)
(74) Mandataire: Atout PI Laplace
(86) Numéro de dépôt international: PCT/EP2021/074933
(87) Numéro de publication internationale: WO 2022/053612

(56) Documents cités:
- KR-A- 20200 021 397
- US-A1- 2019 058 990

## Description

### Domaine de l'invention

L'invention concerne le domaine de la mise à jour logicielle, et concerne en particulier la mise à jour de logiciel embarqué pour la surveillance de structure mettant en oeuvre des guides d'ondes élastiques, et notamment la surveillance d'une voie ferrée.

### Etat de la Technique

La mise à jour de logiciel embarqué pour la surveillance de structure mettant en oeuvre des guides d'ondes élastiques, concerne de nombreux domaines industriels. Différentes structures allongées industrielles se présentent sous la forme de guides d'ondes élastiques: par exemple un rail dans le domaine ferroviaire ou des structures de type portique. Un tuyau (notamment dans les domaines pétroliers ou nucléaires) transportant un fluide est aussi une structure allongée pour laquelle il peut être critique de s'assurer de l'intégrité. De même des câbles, par exemple pour les systèmes de transport de passagers (téléphérique ou autre) sont des structures allongées permettant de mettre en oeuvre des guides d'ondes élastiques.

Ainsi, dans le secteur ferroviaire, le rail est une structure critique dont il faut surveiller l'intégrité. Soumis à des sollicitations thermomécaniques très fortes (e.g. contraintes internes à cause de la dilatation thermique contrariée, passage des trains), les portions de rail s'usent au fur et à mesure du temps et peuvent parfois être sujets à des casses franches. L'état des voies doit être surveillé pour diminuer voire supprimer les risques de déraillement. L'entretien d'un réseau ferroviaire représente un enjeu majeur en termes de coût et de sécurité pour les opérateurs ferroviaires.

Une approche connue pour surveiller l'état des rails consiste à disposer le long du rail, des transducteurs (un transducteur pouvant aussi être désigné par le terme « capteur ») qui émettent des ondes élastiques guidées dans les rails, lesquelles ondes interagissant avec des défauts (rupture ou autre défaut plus mineur). Un signal diffracté est alors analysé par un logiciel spécialisé au niveau d'un dispositif électronique ou « noeud électronique », afin de détecter et localiser un défaut. Ainsi, un dispositif de surveillance d'une voie ferrée peut comprendre une pluralité de noeuds électroniques répartis en réseau sur les rails, chaque noeud pouvant être associé à un ou plusieurs transducteurs, et faisant une analyse locale des signaux qu'il reçoit grâce à un logiciel d'analyse embarqué. Les résultats des analyses des noeuds peuvent être communiqués à un serveur distant pour permettre une analyse plus globale, en général par une technologie de communication sans fil.

Selon la taille et la nature plus ou moins complexe du logiciel d'analyse embarqué, et selon le protocole ou la technologie de communication existant entre les noeuds électroniques et le(s) serveur(s) distant(s), il peut résulter des difficultés quant à la mise à jour du logiciel embarqué.

En effet, les débits de communication peuvent être plus ou moins élevés, et nécessiter plus ou moins d'énergie pour transmettre des données.

Par exemple, bien que les communications cellulaires de type GSM/3G/4G/5G permettent d'envoyer de grandes quantités de données, cette technologie implique des coûts par les abonnements à souscrire, et une consommation d'énergie excessive pour une application de surveillance de voie ferrée. Elle n'est alors pas adaptée à la mise à jour logicielle d'un logiciel d'analyse embarqué dans chaque noeud électronique d'un réseau de noeuds électroniques.

A l'inverse, les protocoles de communications à faible consommation électrique comme le protocole LoRaWAN pour l'internet des objets, qui est l'acronyme de « *Long Range Wide-area network* » ou « réseau étendu à longue portée », permettent des communications à bas débit, par radio selon la technologie LoRa. Une limitation majeure de ce type de protocole, est l'impossibilité d'envoyer de grandes quantités de données. Aussi, toute correction de bug ou tout déploiement de nouvelle fonctionnalité sur un réseau d'objets connectés, requiert de se connecter physiquement à chacun des objets pour corriger un bug ou injecter une nouvelle version logicielle. Une telle opération est longue, et présente des risques d'endommagement des boitiers renfermant les circuits électroniques. Dans le cas d'une application de surveillance de voie ferrée où des noeuds électroniques communiquent avec un serveur distant par technologie Lora, la correction ou mise à jour par personne physique présente des risques majeurs en termes de sécurité car les noeuds sont à proximité des voies. Aussi, les protocoles bas débit de type LoRa ne sont pas adaptés à la mise à jour à distance d'un logiciel embarqué dans chaque noeud électronique.

Récemment l'alliance LoRa a proposé une solution dénommée « FUOTA » pour « Firmware Update Over The Air », considérant que la mise à jour d'un réseau de capteurs est une fonctionnalité critique sans laquelle un déploiement industriel est peu envisageable. L'article de Khaled Abdelfadeel et al., arXiv :2002.08735v1 [cs.Nl] 20 Feb 2020, intitulé `How to make Firmware Updates over LoRaWan Possible', étudie des scénarios de mises à jour par FUOTA pour des logiciels embarqués de petite taille (100 ko max) correspondant à des applications où les traitements embarqués sont peu complexes. Il y est démontré que les mises à jour d'un seul noeud, dans un cas défavorable où le noeud est éloigné de la passerelle LoRa, peuvent mettre plusieurs heures. La solution FUOTA n'est alors pas adaptée au cas de la mise à jour logicielle d'un système de surveillance de voie ferrée ayant un réseau étendu de noeuds électroniques embarquant chacun des circuits électroniques devant faire tourner un système d'exploitation de type Linux pour opérer un logiciel complexe d'analyse pouvant être de plusieurs Mo. La mise à jour d'un tel logiciel par l'approche FUOTA serait trop longue, impliquerait une interruption de service conséquente, et serait très coûteuse énergétiquement pour un système autonome.

Le document US 2019/058990 A1 (HU XIN [DE]) 21 février 2019 décrit un système et un procédé permettant de mettre à jour le micrologiciel d'un module RF à faible débit de données à l'aide de la technologie Bluetooth.

Le document KR 2020 0021397 A (ELECTRONICS & TELECOMMUNICATIONS RES INST [KR]) 28 février 2020 décrit un procédé de mise à jour de logiciel d'un terminal à l'aide d'un système de communication sans fil, consistant à effectuer un processus de mise à jour de logiciel et à changer le mode de communication du premier terminal du deuxième mode de communication au premier mode de communication.

Il existe alors le besoin d'une solution de mise à jour de logiciel embarqué qui pallie les inconvénients précités.

### Résumé de l'invention

La présente invention peut être utilisée pour la surveillance de câbles, tuyaux ou toute autre structure allongée, c'est-à-dire possédant une direction privilégiée, pouvant faire office de guide d'ondes élastiques pour laquelle la technique de surveillance est basée sur l'analyse d'ondes élastiques.

L'invention se situe prioritairement dans le contexte de la mise à jour de logiciel embarqué dans des dispositifs ou noeuds électroniques installés le long de rails ferroviaires, noeuds qui communiquent des données d'analyse de l'état du rail à un serveur distant via un protocole bas débit de type LoRaWan. D'autres réseaux étendus à faible consommation énergétique, définis de manière générique par le terme anglais : « LPWAN » pour « Low Power Wide Area Network » peuvent être utilisés.

Plus généralement, l'invention trouvera application dans tout environnement ayant un réseau d'objets connectés communicants avec un serveur distant via un protocole bas-débit basse consommation.

L'invention est exposée dans le jeu de revendications joint.

Un objet de la présente invention est un procédé permettant une mise à jour logicielle à distance, i.e. sans connexion physique, de noeuds électroniques d'un système de surveillance de structure allongée.

Dans une mise en oeuvre générale, l'invention exploite la capacité d'un noeud électronique à travailler selon différents modes de communication. Lorsqu'une mise à jour du logiciel embarqué est planifiée pour un noeud (et par extension pour une pluralité de noeuds), un ordre est émis, i.e. un message au format LoRa est envoyé vers le(s) noeud(s) du réseau, afin d'activer un protocole haut débit de portée locale (Wifi ou autre protocole comme le Bluetooth) sur le(s) noeud(s). La mise à jour logicielle est ensuite envoyée à la volée via le protocole haut débit activé, grâce à un dispositif mobile (transporté par un train, un opérateur ou un drone), passant à proximité des noeuds. Le protocole haut débit est immédiatement désactivé sur chaque noeud dès la fin de sa mise à jour logicielle, afin de baisser la consommation électrique du noeud.

Contrairement au système FUOTA de l'art antérieur, le dispositif de l'invention permet de maintenir le système de surveillance entièrement à jour sans augmentation drastique de la durée de mise à jour même en cas d'augmentation de la taille des fichiers de mises à jour, que ce soit pour des mises à jour fonctionnelles permettant d'améliorer les algorithmes embarqués ou pour des mises à jour de sécurité comme par exemple lors de l'évolution du noyau Linux.

Un objet de la présente invention est un dispositif de mise à jour à distance de logiciel embarqué, comprenant des moyens pour opérer le procédé de l'invention, qui présente entre autres avantages :
- De limiter, par des interventions rapides, les interruptions de service pour la mise à jour logicielle ;
- D'offrir un faible coût d'intervention soit par un opérateur qui n'a pas besoin de se connecter physiquement au noeud, soit par un drone ou un train ;
- De renforcer la cyber sécurité car laissant moins de possibilités de déposer du code malveillant dans un noeud, en ne laissant ouvert un canal de communication haut-débit que temporairement, à la différence des configurations où un canal de communication à haut débit est ouvert en permanence ;
- D'avoir une faible consommation pour la mise à jour logicielle, en n'allumant que temporairement un protocole de communication haut-débit de portée locale ;
- De permettre de maintenir le service de surveillance de rail une grande partie du temps.

Les protocoles de communication à faible consommation énergétique utilisent des fréquences radio libres, ils sont alors peu coûteux en termes de déploiement, et il est possible de les déployer sur un site si aucun réseau préexistant n'y est disponible, contrairement à des déploiements 4G.

Ce type de protocole de communication à faible consommation énergétique, ne permettant pas la communication de fichiers volumineux, le dispositif de la présente invention est configuré pour que des algorithmes de détection de défaut soient embarqués sous forme de logiciel dans chaque noeud électronique pour faire du diagnostic local. Le résultat est ensuite transmis vers un serveur distant. Avantageusement, les messages générés par les noeuds peuvent se limiter à quelques bits (i.e. fournir une information binaire OUI/NON indiquant que le rail est ou n'est pas endommagé) ou contenir quelques octets (i.e. fournir un message un peu plus élaboré contenant de l'information plus fine, par exemple sur un niveau de criticité de défaut, une localisation, un type...).

Un serveur distant récupère les messages issus des noeuds, afin de mettre en commun les informations locales remontées par chaque noeud, et raffiner le diagnostic pour garantir les détections de défauts réels et limiter les faux positifs.

Avantageusement, dans le contexte de l'invention, le protocole de communication longue portée faible débit (e.g. LoRa, Sigfox , ...) permet de transmettre à un serveur distant une information simplifiée sur l'état de santé du noeud et d'une portion de rail réduite à quelques noeuds. Après analyse et traitement au niveau du serveur (par un module superviseur) de l'ensemble des informations basiques reçues, il est déterminé si il y a une présence probable de défaut, que ce soit une cassure franche, une amorce de casse ou une usure.

Avantageusement, dans le contexte de l'invention, le protocole de communication courte portée haut débit (e.g. Wifi, Bluetooth, ...) permet de transmettre à un noeud une mise à jour logicielle avec un impact très réduit sur le fonctionnement nominal du noeud, en n'activant le protocole de communication haut-débit de portée locale que le temps du téléchargement du code de la mise à jour.
Pour obtenir les résultats recherchés, il est proposé un procédé de mise à jour logicielle d'un logiciel embarqué dans un dispositif électronique ayant un mode de fonctionnement nominal permettant d'échanger des messages avec un serveur distant selon un protocole de communication longue portée faible débit, les messages contenant une information générée par ledit logiciel embarqué, le procédé étant mis en oeuvre par ordinateur et comprenant au moins des étapes consistant à :
- - recevoir via le protocole de communication longue portée faible débit, un message d'activation d'un protocole de communication courte portée haut débit ;
- - activer ledit protocole de communication courte portée haut débit ;
- - stopper le mode de fonctionnement nominal ; et
- - mettre à jour le logiciel embarqué avec une mise à jour logicielle reçue via le protocole de communication courte portée haut débit.
- Selon des modes de réalisation alternatifs ou combinés:
   - l'étape d'activation du protocole de communication courte portée haut débit, comprend des étapes consistant à :
      - recevoir via le protocole de communication courte portée haut débit, une demande de connexion à un dispositif mobile transportant une mise à jour logicielle dudit logiciel embarqué ;
      - recevoir via le protocole de communication courte portée haut débit ladite mise à jour logicielle si la demande est acceptée ; et
      - désactiver le protocole de communication courte portée haut débit.
      - le procédé comprend après l'étape de mise à jour du logiciel embarqué, une étape de réactiver le mode de fonctionnement nominal du dispositif électronique.
      - le protocole de communication longue portée faible débit est un protocole de type LPWAN, et les messages échangés avec le serveur distant sont au format LoRa.
      - le protocole de communication courte portée haut débit est un protocole de type Wifi ou Bluetooth.
      - le procédé comprend après l'étape de recevoir via le protocole de communication courte portée haut débit une demande de connexion à un dispositif mobile, une étape d'authentification de l'identité du dispositif mobile et de vérification de l'intégrité du code de mise à jour.
      - l'étape d'authentification de l'identité du dispositif mobile et de vérification de l'intégrité du code de mise à jour consiste en la vérification de l'algorithme « MAC ».
      - le procédé comprend de plus une étape consistant à envoyer au serveur distant par le protocole de communication longue portée faible débit, un message de confirmation de mise à jour, et une étape de réactivation du fonctionnement nominal.

L'invention couvre aussi un produit programme d'ordinateur comprenant des instructions de code non transitoire permettant d'effectuer les étapes du procédé de l'invention, lorsque le programme est exécuté sur un ordinateur.

L'invention couvre de plus un dispositif de mise à jour logicielle d'un logiciel embarqué dans un dispositif électronique ayant un mode de fonctionnement nominal permettant d'échanger des messages avec un serveur distant selon un protocole de communication longue portée faible débit, les messages contenant une information générée par ledit logiciel embarqué, le dispositif de mise à jour logicielle comprenant des moyens pour mettre en oeuvre les étapes du procédé de l'invention.

Dans un mode de réalisation, le dispositif électronique est un noeud électronique parmi une pluralité de noeuds électroniques embarquant chacun un logiciel pouvant être mis à jour, la pluralité de noeuds électroniques étant partie d'un système de surveillance de l'état de voies ferrées basé sur l'analyse d'ondes élastiques guidées dans les rails.

L'invention couvre aussi un système de surveillance de l'état de voies ferrées basé sur l'analyse d'ondes élastiques guidées dans les rails, le système comprenant une pluralité de noeuds électroniques, chaque noeud électronique comprenant au moins un logiciel d'analyse d'ondes élastiques guidées dans les rails, et comprenant de plus des moyens pour établir un mode nominal de communication longue portée faible débit pour transmettre vers un serveur distant des messages au format « LoRa » de diagnostic de défaut dans les rails, et pour établir un mode temporaire de communication courte portée haut débit pour recevoir des données de mise à jour logicielle.

### Description des figures

D'autres caractéristiques et avantages de l'invention apparaîtront à l'aide de la description qui suit et des figures des dessins annexés dans lesquels :
[Fig.1] illustre un contexte d'implémentation du dispositif de l'invention pour une application ferroviaire ;
[Fig.2] illustre un exemple de topologie LoRaWan applicable à la mise en oeuvre de l'invention ;
[Fig.3] illustre la structure typique d'un paquet LoRa ;
[Fig.4] illustre un exemple de structure d'un noeud électronique selon l'invention ;
[Fig. 5] illustre sur un diagramme temporel, les étapes générales du procédé de mise à jour logicielle de l'invention dans un mode de réalisation.

### Description détaillée

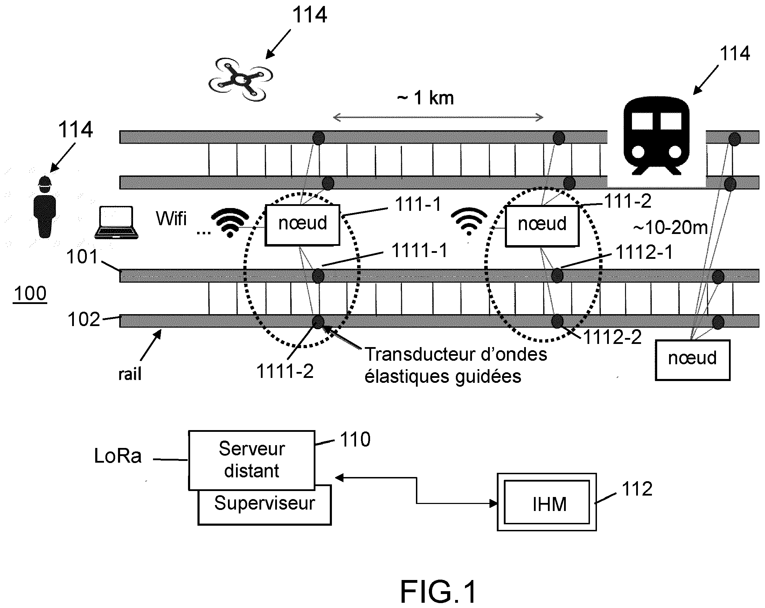

La figure 1 illustre un exemple d'implémentation du dispositif de mise à jour logicielle de l'invention pour une application ferroviaire. Cependant, cet exemple est non limitatif et l'homme du métier pourra adapter l'implémentation décrite à toute autre application mettant en oeuvre un guide d'ondes allongé. Dans l'exemple décrit, le guide d'ondes est un rail.

La figure 1 montre les rails 101, 102 d'une voie ferrée 100 équipés de transducteurs d'ondes élastiques 1111-1, 1112-1, 1111-2, 1112-2.

Le terme « équipés » signifie que les transducteurs peuvent se trouver sur un ou plusieurs emplacements sélectionnés parmi : sous le champignon que ce soit sur l'âme interne du rail et/ou sur l'âme externe du rail, sous le rail. Dans l'exemple illustré, deux transducteurs (1111-1, 1111-2) sont disposés respectivement sur un des deux rails 101, 102 à proximité d'un premier noeud électronique 111-1, et deux transducteurs (1112-1,12112-2) sont disposés respectivement sur un des deux rails 101, 102 à proximité d'un second noeud électronique 111-2.

L'homme du métier comprend que l'exemple est pris pour décrire les principes de l'invention mais n'est pas limitatif quant au nombre de transducteurs, de noeuds pouvant être déployés et à la distance entre les noeuds. Par exemple, des noeuds électroniques peuvent être installés tous les kilomètres le long d'une voie ferrée.

Bien que non décrit, des transducteurs peuvent aussi être disposés sur les rails d'une seconde voie ferrée pour la circulation de trains dans l'autre sens, ces transducteurs pouvant être couplés aux mêmes noeuds électroniques que la première voie ferrée.

Un transducteur est un dispositif convertissant un signal physique en un autre. Il existe une grande variété de transducteurs. Pour la génération et la réception d'ondes acousto-élastiques se transmettant dans un matériau (un rail, un tube, une structure, etc), l'utilisation d'un transducteur acoustique électromagnétique (en anglais « ElectroMagneto-Acoustic Transducer », acronyme EMAT) peut constituer une alternative à l'utilisation d'un transducteur piézoélectrique (acronyme PZT).

Chaque noeud électronique installé le long d'une voie ferrée est configuré, i.e. comprend au moins un module logiciel d'analyse d'ondes élastiques, pour analyser des signaux issus des transducteurs afin de déterminer l'existence de défaut dans les rails. Différents types d'ondes élastiques se propagent entre deux transducteurs 1111-1 et 1112-1. Chaque transducteur peut fonctionner à la fois comme émetteur et comme récepteur. Plusieurs signaux sont alors exploitables, ces signaux correspondants à : une onde transmise de l'émetteur au récepteur et inversement, ainsi qu'une onde réfléchie lorsqu'un émetteur fonctionne en pulse-echo (le même transducteur jouant le rôle d'émetteur et de récepteur). Ainsi, la présence et/ou l'absence d'onde transmise et/ou réfléchie renseigne sur la présence ou non de défaut localement.

Les noeuds électroniques sont configurés pour communiquer avec un serveur distant 110, des messages informant de la présence ou non de défaut dans la portion de rail considérée.

Dans le contexte de l'invention, la communication des messages de diagnostic de défaut entre les noeuds électroniques et le serveur distant s'établit selon un protocole de communication à faible consommation énergétique. Dans un mode de réalisation, le protocole est LoRaWan et les messages sont formatés selon la structure de trames LoRa.

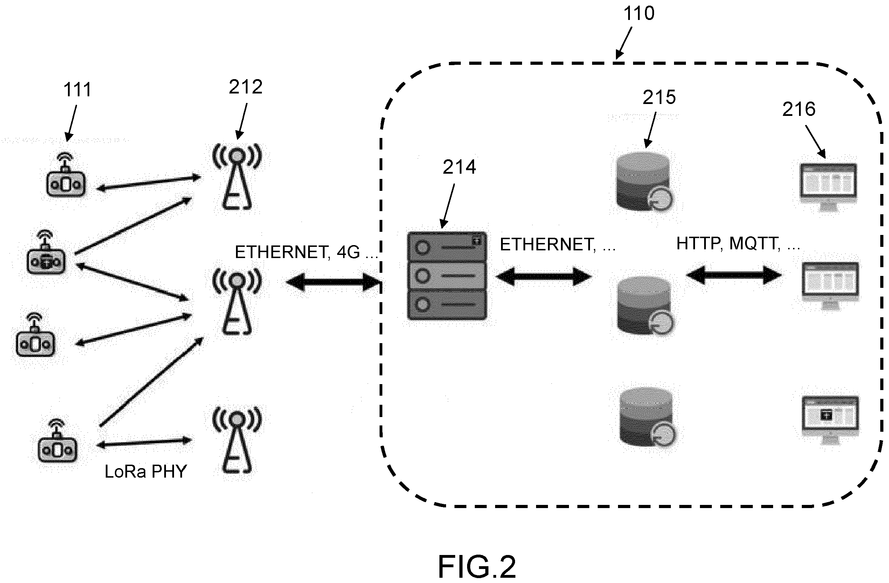

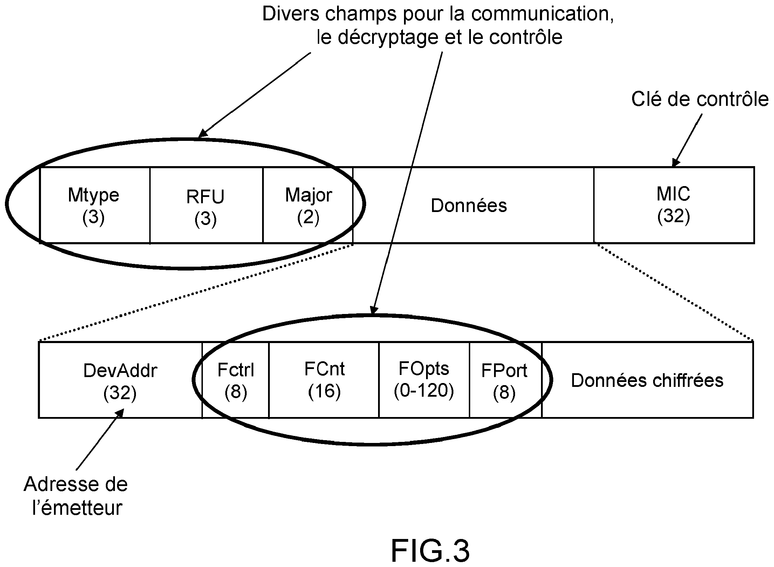

La figure 2 illustre un exemple de topologie LoRaWan et la figure 3 montre un format connu de trame LoRa.

Le « LoRaWan » pour « Long Range Wide-area network » est un protocole de communication bidirectionnel bas débit par ondes radio ayant plusieurs avantages:
- Une consommation réduite ;
- Un volume faible ; et
- Un coût faible.

Les bandes de fréquences utilisées sont libres (868MHz par exemple en Europe) mais limitées (~ 36s/h pour le 868MHz) ce qui contraint la taille des données émises (à quelques dizaines de kbits/h).

Un réseau LoRaWAN typique montré en figure 2 est constitué d'équipements 111 sans-fils basse consommation qui communiquent avec des serveurs applicatifs 110 (regroupant serveur réseau 214, serveur d'application 215 et applicatif 216) au travers de passerelles 212. La technique de modulation utilisée entre les équipements 111 et les passerelles 212 est LoRa. La communication entre les passerelles 212 et les serveurs 110 est établie via le protocole IP au moyen d'un réseau de collecte Ethernet ou 3G/4G.

La topologie réseau LoRaWAN est dite en étoile d'étoiles (« star-of-stars » en anglais) avec au centre un serveur réseau applicatif qui est connecté à une multitude de passerelles elles-mêmes connectées à une multitude d'équipements terminaux.

Au sens réseau, les équipements ne sont pas connectés aux passerelles (et ne sont donc pas montrées sur la figure 1). Les passerelles servent uniquement de relais pour joindre le serveur 214 gérant le réseau, lui-même connecté à un ou plusieurs serveurs applicatifs 215, 216. Les paquets de données envoyés par les équipements 111 sont retransmis par les passerelles après y avoir uniquement ajouté des informations concernant la qualité du signal reçu.

La figure 3 illustre la structure typique d'un paquet LoRa où les tailles des champs sont indiquées en bits, qui se compose d'un préambule, éventuellement d'un en-tête, d'un champ pour les données et éventuellement d'un contrôle d'erreurs. La taille maximale des données se situe entre 51 et 222 octets selon le facteur d'étalement (SF) utilisé (plus le SF est grand plus la taille des données est faible). Les différents champs contenus dans un paquet LoRaWAN sont :
- Mtype : Ce champ indique le type du message (montant ou descendant).
- FU : Ce champ est réservé pour usage futur.
- Major : Ce champ indique la version du protocole utilisée.
- MIC : Ce champ permet le calcul d'intégrité du paquet afin de détecter s'il a été altéré durant son transport.
- DevAddr : Ce champ contient l'adresse de l'équipement.
- FCtrl : Ce champ permet l'adaptation du débit et les acquittements. Il indique la présence de paquets supplémentaires ainsi que la longueur du champ FOpts.
- FCnt : Ce champ est un compteur de trame (incrément à chaque envoi).
- FOpts : Ce champ permet de passer des commandes MAC (contrôle de connectivité par un équipement par exemple).
- FPort : Ce champ contient le port de l'application ou du service auquel est adressé le paquet.

L'homme du métier pourra se reporter à la littérature existante pour compléter la lecture relative à la technologie Lora, tels que les documents de spécifications rendus disponibles par la « LoRaWaN Alliance ».

Revenant à la figure 1, le serveur distant 110 est configuré (i.e. comprend des moyens dits de supervision) pour combiner les messages de diagnostic de défaut reçus des noeuds électroniques et contenant des informations de diagnostic local générées par le module logiciel d'analyse de défaut du noeud électronique ayant envoyé le message. Le serveur distant effectue un diagnostic de défaut global qui est précis par l'agrégation des diagnostics locaux.

Les résultats d'analyse peuvent être affichés sur une interface IHM 112 dans une forme directement exploitable par l'utilisateur, indiquant visuellement sur une carte de la voie par exemple la localisation du/des défaut(s), ou dans toute autre forme adaptée à l'application. Une alerte peut être envoyée aux conducteurs de trains et/ou à tout système de régulation du trafic, et/ou une commande de freinage peut être déclenchée en fonction du résultat de l'analyse.

Pour la mise en oeuvre du procédé de mise à jour logicielle de l'invention, les noeuds électroniques sont configurés pour communiquer selon un protocole courte portée haut débit avec un dispositif mobile 114.

Un dispositif mobile au sens de la présente invention peut être tout type d'appareil apte à se connecter selon un protocole courte portée haut débit à un noeud lorsqu'il en est proche. Il peut être rendu mobile de manière autonome ou en étant transporté par un opérateur, un drone ou un train circulant sur la voie comme illustré. Le dispositif mobile comprend au moins une unité mémoire pour stocker une mise à jour logicielle qui doit être appliquée au(x) noeud(s).

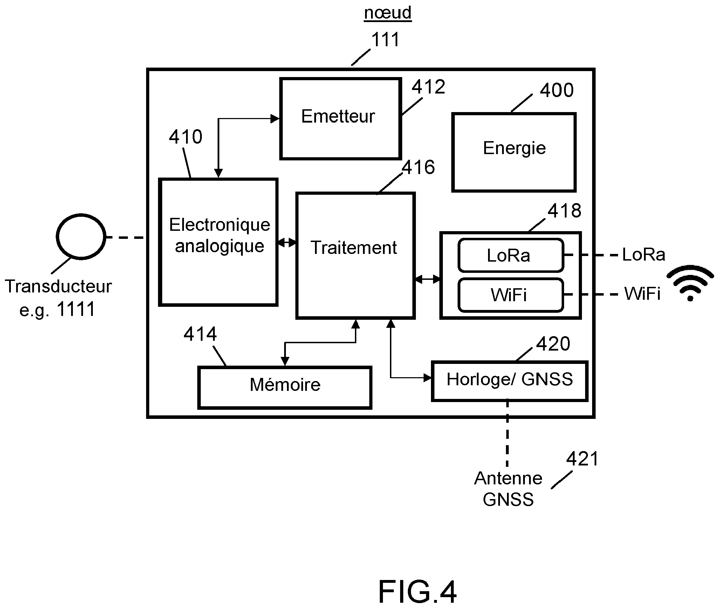

La figure 4 illustre un exemple de structure d'un noeud électronique 111 dans un mode de réalisation permettant de faire une mise à jour logicielle selon le procédé de l'invention.

Généralement, un noeud 111 comprend : une source d'énergie 400 (e.g. alimentation électrique de type batterie, panneaux solaires, accès à une alimentation externe, etc.) ; un circuit électronique comprenant un circuit 410 de mesure d'ondes élastiques ; un circuit 412 d'émission d'ondes élastiques ; des composants 414 de stockage ; un circuit 416 de traitement du signal (FPGA, CPU ou autre pour le traitement des signaux reçus) ; un circuit 418 de communication sans fil ; un récepteur GNSS (Géolocalisation et Navigation par un Système de Satellites) 420, par exemple de type GPS incluant une antenne 421 et l'électronique embarquée.

Un noeud 111 est couplé à au moins un transducteur (e.g. 1111) d'ondes élastiques guidées, qui est par exemple installé sur un rail à proximité du noeud.

La source d'énergie 400 peut être fournie par des systèmes dynamos rechargés par le passage des trains sur la voie ferrée et/ou par un ou plusieurs panneaux photovoltaïques et/ou par un ou plusieurs mâts éoliens.

Le circuit de communication sans fil 418 est configuré pour établir au moins deux modes de communication : un mode de communication longue portée faible débit (e.g. LoRa, Sigfox , ...) et un mode de communication courte portée haut débit (e.g. Wifi, Bluetooth, ...).

Le circuit de communication sans fil 418 comprend des composants appropriés et antenne associée pour transmettre des messages de diagnostic de défaut selon le protocole de communication longue portée faible débit LoRa, ainsi que des composants appropriés et antenne associée pour recevoir selon le protocole courte portée haut débit WiFi des données de mise à jour logicielle.

Le circuit GNSS 420 peut être partagé entre plusieurs transducteurs. Un système de positionnement par satellites, dit GNSS (pour Géolocalisation et Navigation par un Système de Satellites), repose sur une constellation de satellites artificiels permettant de fournir à un utilisateur ou un circuit (par l'intermédiaire d'un récepteur portable) sa position, sa vitesse et l'heure. Dans un mode de réalisation, les circuits GNSS sont associés avec les transducteurs de manière à horodater précisément les signaux mesurés par les transducteurs, tout en garantissant une synchronisation inférieure à la microseconde entre deux noeuds distants de plusieurs kilomètres (la distance n'importe pas tant qu'il existe une couverture par GNSS sur les deux noeuds considérés).

Dans certains modes de réalisation, les circuits d'horodatage et/ou les circuits de calcul et/ou les circuits GNSS peuvent être diversement distribués dans l'espace (e.g. existence de centres, système entièrement distribué, arrangement hiérarchique entre noeuds).

Le circuit de calcul ou de traitement du signal 416 est associé à des ressources de calcul et/ou de mémoire 414 qui peuvent être locales ou à distance. Le circuit de traitement du signal 416 qui est embarqué dans chaque noeud permet à partir des signaux émanant des ondes élastiques reçus des noeuds voisins proches, de faire un diagnostic local, concernant la présence ou non d'un défaut localement. Le circuit de calcul et le logiciel d'analyse de défaut 416 permettent de déterminer ou détecter l'existence d'un ou de plusieurs défauts locaux sur une longueur de rail incluant quelques transducteurs, à partir de mesures synchronisées des ondes acousto-élastiques se propageant dans le rail.

Un défaut local peut être déterminé - son existence, sa localisation, sa catégorie - par application de seuils prédéfinis, lesdits seuils prédéfinis étant déterminés par référence à un état réel, par exemple par rapport à un état du rail qui est connu comme sain ou par rapport à un état calibré dudit rail, ou par référence à un état simulé du rail.

Un défaut peut être caractérisé, notamment en matière de nature, de taille, d'orientation dans l'espace ou de géométrie, par une analyse d'amplitude et/ou de fréquence et/ou par une analyse de la forme du signal et/ou par une analyse du spectre fréquentiel des signaux de mesure et/ou de la fonction représentative de la réponse impulsionnelle du rail et/ou par l'identification d'un changement de mode de propagation d'au moins une des ondes se propageant dans le rail. Un défaut peut notamment être orienté horizontalement, ou verticalement. En fonction de l'analyse des signaux, la position et la taille peuvent être estimées. Par apprentissage ou par comparaison avec des abaques tirées de modèles mathématiques ou numériques, une caractérisation quantitative peut permettre de déterminer un type de défaut (corrosion, fissure, discontinuité, etc).

La caractérisation d'un défaut peut se faire par diagnostic différencié entre le signal reçu se transmettant via le champignon du rail et celui se transmettant via l'âme du rail. Par exemple si le signal se transmet vers une extrémité du rail et pas de l'autre, il est possible de déterminer approximativement l'étendue du défaut ainsi que sa position dans la section du rail. Dans le cas où aucun signal n'est transmis, il est probable que la rupture du rail est quasi-complète. Pour pallier les incertitudes de diagnostic, avantageusement le dispositif de l'invention permet de remonter tous les diagnostics locaux vers un superviseur (module d'analyse d'un serveur éloigné) qui agrège l'ensemble des informations pour permettre un diagnostic global et une caractérisation précise de défaut.

Chaque noeud n'ayant qu'une information parcellaire sur le système global, le diagnostic local et simplifié réalisé par un noeud est transmis au serveur distant 110 où un logiciel de supervision permet d'agréger les données des noeuds afin d'améliorer le diagnostic, et émettre une décision finale. En effet, lorsqu'un noeud ne reçoit pas de signal, ce dernier considère qu'il y a une rupture de rail alors que cela peut provenir de la non- émission du signal par l'émetteur. Aussi, le serveur qui agrège les informations reçues des noeuds, va déterminer l'état dudit noeud émetteur. L'analyse faite au niveau du serveur distant permet ainsi de raffiner la détection de défaut et engendrer de meilleures décisions.

Différents scénarios de transmission des informations locales reçues par chaque noeud vers le serveur distant sont possibles, permettant plus ou moins de communications dans la journée. Un choix d'implémentation peut être celui d'avoir des messages les plus courts possibles mais fréquents, et ne contenant alors qu'une information binaire sur l'état de santé de chaque tronçon (par exemple '0' pour `sain' et '1' pour 'endommagé'). Des messages plus complets contenant des informations supplémentaires telles que la criticité ou la position du défaut, une estimation de la taille, la température, l'état de santé de la batterie, l'état de santé du noeud en cas d'éléments défaillants, peuvent également être émis, mais alors à des fréquences moins élevées.

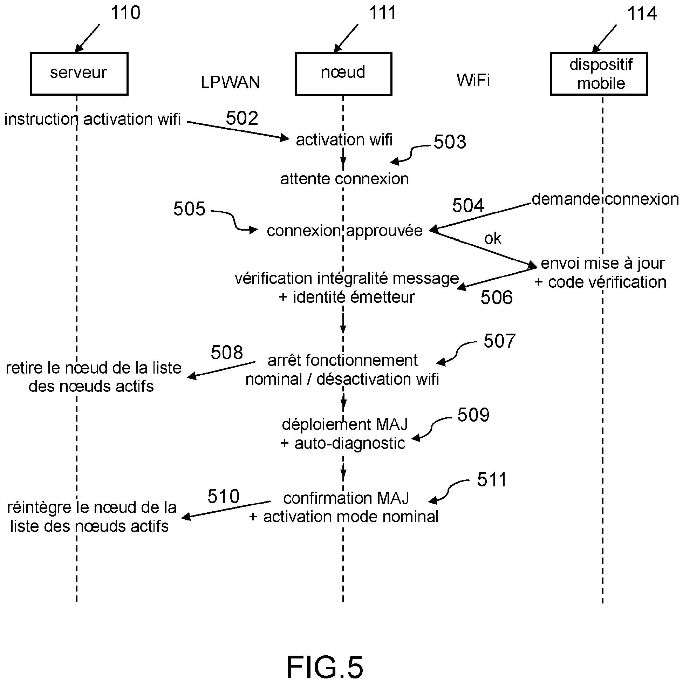

La figure 5 illustre sur un diagramme temporel, les étapes générales du procédé de mise à jour logicielle de l'invention dans un mode de réalisation.

Lorsqu'une mise à jour du logiciel embarqué dans un(des) noeud(s) électronique(s) 111 s'avère nécessaire, le serveur distant 110 envoie 502 via le protocole de communication à faible consommation énergétique LPWAN, un ordre au(x) noeud(s) du réseau concerné(s), i.e. tous ou une partie de la pluralité des noeuds du réseau, par exemple uniquement ceux qui sont défaillants, une instruction d'activer leur réseau de communication haut débit (Wifi ou Bluetooth).

Dans un mode de fonctionnement, l'activation 503 par le noeud de son composant de communication Wifi peut se faire tout en maintenant une activité normale du noeud (son mode dit nominal).

Dans une variante de réalisation, l'instruction d'activation reçue par le noeud peut comporter une clé d'identification unique ou « clé secrète », qui va permettre au noeud de s'assurer, par des mécanismes d'authentification de message connus (i.e. MAC pour « Message Authentication code » en anglais) ou autre technique similaire, de l'identité de l'émetteur de la mise à jour, et de l'intégrité du code logiciel de mise à jour qui pourrait éventuellement être altéré lors de sa transmission.

Après l'activation 503 de son mode de communication Wifi, le noeud est dans un état d'attente de recevoir une demande de connexion d'un dispositif mobile 114 transportant la mise à jour logicielle. Selon la nature du dispositif mobile et son mode de déplacement, ce dernier va passer à proximité du noeud en attente de connexion, concerné par la mise à jour. Lorsqu'il arrive à proximité du noeud, la demande de connexion est approuvée par le noeud et la connexion entre le noeud 111 et le dispositif mobile s'établit 504.

Une fois la connexion approuvée 505 par le noeud, le dispositif mobile envoie le code de mise à jour au noeud 506.

Dans une étape optionnelle, le noeud qui au préalable a reçu du serveur une clé secrète, peut authentifier l'identité du dispositif mobile émetteur qui fait la demande de connexion, et le cas échéant autoriser le téléversement du logiciel dans sa mémoire interne.

Dans une variante de réalisation, l'étape où le noeud s'assure de l'identité de l'émetteur (dispositif mobile) peut être faite a posteriori par la vérification de l'algorithme MAC bien connu. En effet, seul un émetteur légitime devrait posséder la clé secrète et donc transmettre le bon code d'authentification du message. La clé secrète peut être transmise via le protocole LoRa avec l'instruction de mise à jour ou encore être paramétrée en dur dans le noeud.

Une fois le code de mise à jour reçu, et le cas échéant une fois la validité du logiciel qui est reçu par le noeud reconnue, le noeud désactive 507 la communication haut débit (Wifi ou Bluetooth).

De manière simultanée, le noeud 111 arrête son fonctionnement nominal et informe 508 le serveur 110, qui le retire de la liste des noeuds actifs du réseau.

Le noeud 111 peut alors procéder au déploiement 509 de la mise à jour logicielle reçue.

Dans une étape suivante 510, le noeud envoie au serveur par le protocole de communication à faible consommation énergétique LPWAN, un message de confirmation qu'il est bien à jour, puis dans une étape suivante 511 il réactive son fonctionnement nominal (après une éventuelle phase d'autodiagnostic).

Le procédé de mise à jour logicielle décrit permet que l'interruption du mode nominal d'un noeud soit réduite uniquement au temps du déploiement de la mise à jour par le noeud lui-même (étapes 507 à 511), et ainsi maintenir actif le service de surveillance une grande partie du temps.

Par ailleurs, le procédé de mise à jour logicielle décrit permet que la consommation pour une mise à jour logicielle soit faible, grâce à une activation temporaire d'un protocole de communication haut-débit de portée locale (étapes 502 à 507), limitée au temps de téléchargement du code d'un dispositif mobile vers un noeud.

L'invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être centralisés et/ou être distribués ("Cloud computing"), éventuellement avec ou selon des technologies de pair-à-pair et/ou de virtualisation et/ou de redondance. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul. La mise en oeuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc.). Le système (ou ses variantes) implémentant une ou plusieurs des étapes du procédé peut utiliser un ou plusieurs circuits électroniques dédiés ou un circuit à usage général. Le procédé peut aussi être mis en oeuvre sur une machine de calcul reprogrammable (un processeur ou un microcontrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment améliorer les performances. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, APIs, web services, ou toute autre forme d'instruction d'ordinateur) qui peut être utilisé pour programmer un ou plusieurs processeurs pour mettre en oeuvre des étapes du procédé.

## Revendications

1. Procédé de mise à jour logicielle d'un logiciel pour la surveillance de structure allongée mettant en oeuvre des guides d'ondes élastiques, ledit logiciel étant embarqué dans un dispositif électronique (111) installé le long de ladite structure allongée, qui communique avec un serveur distant (110) dans un mode de fonctionnement nominal permettant d'échanger des messages avec le serveur distant selon un protocole de communication longue portée faible débit, les messages contenant des données d'analyse de l'état de la structure allongée, le procédé étant mis en oeuvre par ordinateur et comprenant au moins des étapes consistant à :
- recevoir (502) via le protocole de communication longue portée faible débit, un message d'activation au niveau du dispositif électronique d'un protocole de communication courte portée haut débit ;
- activer (503) un mode de fonctionnement temporaire dudit dispositif électronique permettant d'échanger des messages selon ledit protocole de communication courte portée haut débit, et désactiver le mode de fonctionnement nominal pour stopper les communications longue portée faible débit avec le serveur distant;
- mettre à jour (509) le logiciel embarqué avec une mise à jour logicielle reçue via le protocole de communication courte portée haut débit ;
- désactiver le mode de fonctionnement temporaire courte portée haut débit ; et
- réactiver (511) le mode de fonctionnement nominal.

2. Procédé selon la revendication 1 comprenant après l'étape d'activation du mode de fonctionnement temporaire courte portée haut débit, des étapes consistant à :
- recevoir (504) via le protocole de communication courte portée haut débit, une demande de connexion à un dispositif mobile (114) transportant une mise à jour logicielle dudit logiciel embarqué ;
- recevoir (506) via le protocole de communication courte portée haut débit ladite mise à jour logicielle si la demande est acceptée (505) ; et
- désactiver (507) le protocole de communication courte portée haut débit.

3. Procédé selon la revendication 1 ou 2 dans lequel le protocole de communication longue portée faible débit est un protocole de type « Low Power Wide Area Network, LPWAN », et les messages échangés avec le serveur distant étant au format « Long Range, LoRa ».

4. Procédé selon l'une quelconque des revendications 1 à 3 dans lequel dans lequel le protocole de communication courte portée haut débit est un protocole de type Wifi ou Bluetooth.

5. Procédé selon l'une quelconque des revendications 2 à 4 comprenant après l'étape de recevoir via le protocole de communication courte portée haut débit une demande de connexion à un dispositif mobile, une étape d'authentification de l'identité du dispositif mobile et de vérification de l'intégrité du code de mise à jour.

6. Procédé selon la revendication 5 dans lequel l'étape d'authentification de l'identité du dispositif mobile et de vérification de l'intégrité du code de mise à jour utilisent un algorithme « Message Authentication Code, MAC ».

7. Procédé selon l'une quelconque des revendications 1 à 6 comprenant de plus une étape (510) consistant à envoyer au serveur distant par le protocole de communication longue portée faible débit, un message de confirmation de mise à jour, et une étape (511) de réactivation du fonctionnement nominal.

8. Produit programme d'ordinateur, ledit programme d'ordinateur comprenant des instructions de code permettant d'effectuer les étapes du procédé selon l'une quelconque des revendications 1 à 7, lorsque ledit programme est exécuté sur un ordinateur.

9. Dispositif de mise à jour logicielle d'un logiciel pour la surveillance de structure allongée mettant en oeuvre des guides d'ondes élastiques embarqué dans un dispositif électronique (111) ayant un mode de fonctionnement nominal permettant d'échanger des messages avec un serveur distant (110) selon un protocole de communication longue portée faible débit, les messages contenant des données d'analyse de l'état de la structure allongée, le dispositif de mise à jour logicielle comprenant des moyens pour mettre en oeuvre les étapes du procédé selon l'une quelconque des revendications 1 à 7.

10. Dispositif de mise à jour logicielle selon la revendication 9 dans lequel le dispositif électronique est un noeud électronique parmi une pluralité de noeuds électroniques embarquant chacun un logiciel pouvant être mis à jour, la pluralité de noeuds électroniques étant partie d'un système de surveillance de l'état de voies ferrées basé sur l'analyse d'ondes élastiques guidées dans les rails.

11. Système de surveillance de l'état de voies ferrées basé sur l'analyse d'ondes élastiques guidées dans les rails, le système comprenant une pluralité de noeuds électroniques embarquant chacun au moins un logiciel d'analyse d'ondes élastiques guidées dans les rails pouvant être mis à jour selon les étapes du procédé de l'une quelconque des revendications 1 à 7, et comprenant de plus des moyens pour établir un mode nominal de communication longue portée faible débit pour transmettre vers un serveur distant des messages au format « LoRa » de diagnostic de défaut dans les rails, et pour établir un mode temporaire de communication courte portée haut débit pour recevoir des données de mise à jour logicielle.

## Patentansprüche

1. Verfahren zur Softwareaktualisierung einer Software für die Überwachung einer langgestreckten Struktur, die elastische Wellenleiter einsetzt, wobei die Software in einer elektronischen Vorrichtung (111) eingebettet ist, die entlang der langgestreckten Struktur installiert ist, die mit einem Remote-Server (110) in einem nominalen Betriebsmodus kommuniziert, der es ermöglicht, Nachrichten mit dem Remote-Server gemäß einem Langstrecken-Kommunikationsprotokoll mit niedriger Geschwindigkeit auszutauschen, wobei die Nachrichten Daten zur Analyse des Zustands der langgestreckten Struktur enthalten, wobei das Verfahren durch einen Computer implementiert wird und mindestens folgende Schritte umfasst:
- Empfangen (502), über das Langstrecken-Kommunikationsprotokoll mit niedriger Geschwindigkeit, einer Aktivierungsnachricht auf Ebene der elektronischen Vorrichtung eines Kurzstrecken-Kommunikationsprotokolls mit hoher Geschwindigkeit;
- Aktivieren (503) eines temporären Betriebsmodus der elektronischen Vorrichtung, der es ermöglicht, Nachrichten gemäß dem Kurzstrecken-Kommunikationsprotokoll mit hoher Geschwindigkeit auszutauschen, und Deaktivieren des nominalen Betriebsmodus, um die Langstrecken-Kommunikation mit niedriger Geschwindigkeit mit dem Remote-Server zu stoppen;
- Aktualisieren (509) der eingebetteten Software mit einer Softwareaktualisierung, die über das Kurzstrecken-Kommunikationsprotokoll mit hoher Geschwindigkeit empfangen wird;
- Deaktivieren des temporären Kurzstrecken-Betriebsmodus mit hoher Geschwindigkeit; und
- erneutes Aktivieren (511) des nominalen Betriebsmodus.

2. Verfahren nach Anspruch 1, das nach dem Schritt des Aktivierens des temporären Kurzstrecken-Betriebsmodus mit hoher Geschwindigkeit die folgenden Schritte umfasst:
- Empfangen (504), über das Kurzstrecken-Kommunikationsprotokoll mit hoher Geschwindigkeit, einer Verbindungsanfrage an eine mobile Vorrichtung (114), die eine Softwareaktualisierung der eingebetteten Software transportiert;
- Empfangen (506), über das Kurzstrecken-Kommunikationsprotokoll mit hoher Geschwindigkeit, der Softwareaktualisierung, wenn die Anfrage akzeptiert wurde (505); und
- Deaktivieren (507) des Kurzstrecken-Kommunikationsprotokolls mit hoher Geschwindigkeit.

3. Verfahren nach Anspruch 1 oder 2, wobei das Langstrecken-Kommunikationsprotokoll mit niedriger Geschwindigkeit ein Protokoll vom Typ "Low Power Wide Area Network, LPWAN" ist und die mit dem Remote-Server ausgetauschten Nachrichten im Format "Long Range, LoRa" sind.

4. Verfahren nach einem der Ansprüche 1 bis 3, wobei das Kurzstrecken-Kommunikationsprotokoll mit hoher Geschwindigkeit ein Protokoll vom Typ Wifi oder Bluetooth ist.

5. Verfahren nach einem der Ansprüche 2 bis 4, das nach dem Schritt des Empfangens, über das Kurzstrecken-Kommunikationsprotokoll mit hoher Geschwindigkeit, einer Verbindungsanfrage an eine mobile Vorrichtung einen Schritt des Authentifizierens der Identität der mobilen Vorrichtung und des Überprüfens der Integrität des Aktualisierungscodes umfasst.

6. Verfahren nach Anspruch 5, wobei der Schritt des Authentifizierens der Identität der mobilen Vorrichtung und des Überprüfens der Integrität des Aktualisierungscodes einen "Message Authentication Code, MAC"-Algorithmus verwendet.

7. Verfahren nach einem der Ansprüche 1 bis 6, das außerdem einen Schritt (510), der darin besteht, eine Aktualisierungsbestätigungsnachricht an den Remote-Server über das Langstrecken-Kommunikationsprotokoll mit niedriger Geschwindigkeit zu senden, und einen Schritt (511) des erneuten Aktivierens des nominalen Betriebs umfasst.

8. Computerprogrammprodukt, wobei das Computerprogramm Codeanweisungen umfasst, die es ermöglichen, die Schritte des Verfahrens nach einem der Ansprüche 1 bis 7 durchzuführen, wenn das Programm auf einem Computer ausgeführt wird.

9. Vorrichtung zur Softwareaktualisierung einer Software zur Überwachung einer langgestreckten Struktur, die elastische Wellenleiter einsetzt, die in einer elektronischen Vorrichtung (111) eingebettet ist, die einen nominalen Betriebsmodus aufweist, der es ermöglicht, Nachrichten mit einem Remote-Server (110) gemäß einem Langstrecken-Kommunikationsprotokoll mit niedriger Geschwindigkeit auszutauschen, wobei die Nachrichten Daten zur Analyse des Zustands der langgestreckten Struktur enthalten, wobei die Vorrichtung zur Softwareaktualisierung Mittel zum Durchführen der Schritte des Verfahrens nach einem der Ansprüche 1 bis 7 umfasst.

10. Vorrichtung zur Softwareaktualisierung nach Anspruch 9, wobei die elektronische Vorrichtung ein elektronischer Knoten aus einer Vielzahl von elektronischen Knoten ist, in die jeweils eine aktualisierbare Software eingebettet ist, wobei die Vielzahl von elektronischen Knoten Teil eines Systems zur Überwachung des Zustands von Eisenbahnschienen ist, das auf der Analyse von in den Schienen geführten elastischen Wellen basiert.

11. System zur Überwachung des Zustands von Eisenbahnschienen, das auf der Analyse von in den Schienen geführten elastischen Wellen beruht, wobei das System eine Vielzahl von elektronischen Knoten umfasst, in denen jeweils mindestens eine Software zur Analyse von in den Schienen geführten elastischen Wellen eingebettet ist, die gemäß den Schritten des Verfahrens nach einem der Ansprüche 1 bis 7 aktualisiert werden kann, und außerdem Mittel zum Einrichten eines nominalen Modus der Langstrecken-Kommunikation mit niedriger Geschwindigkeit, zum Übertragen von Nachrichten im Format "LoRa" zur Diagnose von Fehlern in den Schienen an einen Remote-Server und zum Einrichten eines temporären Modus der Kurzstrecken-Kommunikation mit hoher Geschwindigkeit, um Daten zur Softwareaktualisierung zu empfangen, umfasst.

## Claims

1. A software update method for a software program for monitoring an elongate structure which uses resilient wave guides, the software program being installed on-board an electronic device (111) which is installed along the elongate structure, which communicates with a remote server (110) in a nominal operating mode which enables messages to be exchanged with the remote server in accordance with a low-speed long-range communication protocol, the messages containing data for analysing the state of the elongate structure, the method being implemented by a computer and comprising at least steps involving:
- receiving (502) via the low-speed long-range communication protocol an activation message for activating a high-speed short-range communication protocol at the electronic device;
- activating (503) a temporary operating mode of the electronic device which enables messages to be exchanged in accordance with the high-speed short-range communication protocol, and deactivating the nominal operating mode in order to stop the low-speed long-range communications with the remote server;
- updating (509) the on-board software program with a software update which is received via the high-speed short-range communication protocol;
- deactivating the temporary high-speed short-range operating mode; and
- reactivating (511) the nominal operating mode.

2. The method according to claim 1, comprising, after the step of activating the temporary high-speed short-range operating mode, steps involving:
- receiving (504) via the high-speed short-range communication protocol a connection request for connection to a mobile device (114) which transports a software update of the on-board software program;
- receiving (506) via the high-speed short-range communication protocol the software update if the request is accepted (505); and
- deactivating (507) the high-speed short-range communication protocol.

3. The method according to claim 1 or 2, wherein the low-speed long-range communication protocol is a protocol of the "Low Power Wide Area Network, LPWAN" type and the messages exchanged with the remote server are in the "Long Range, LoRa" format.

4. The method according to any one of claims 1 to 3, wherein the high-speed short-range communication protocol is a protocol of the WiFi or Bluetooth type.

5. The method according to any one of claims 2 to 4, comprising after the step of receiving via the high-speed short-range communication protocol a connection request for connection to a mobile device, a step of authenticating the identity of the mobile device and verifying the integrity of the update code.

6. The method according to claim 5, wherein the step of authenticating the identity of the mobile device and verifying the integrity of the update code uses a "Message Authentication Code, MAC" algorithm.

7. The method according to any one of claims 1 to 6, further comprising a step (510) which involves sending to the remote server via the low-speed long-range communication protocol an update confirmation message, and a step (511) of reactivating the nominal operation.

8. A computer program product, the computer program comprising encoding instructions which enable the steps of the method according to any one of claims 1 to 7 to be carried out when the program is carried out on a computer.

9. A software update device for a software program for monitoring an elongate structure which uses resilient wave guides installed on-board an electronic device (111) having a nominal operating mode which enables messages to be exchanged with a remote server (110) in accordance with a low-speed long-range communication protocol, the messages containing data for analysing the state of the elongate structure, the software update device comprising means for carrying out the steps of the method according to any one of claims 1 to 7.

10. The software update device according to claim 9, wherein the electronic device is an electronic node from a plurality of electronic nodes, each one containing a software program which can be updated, the plurality of electronic nodes being part of a system for monitoring the state of railways based on the analysis of resilient waves which are guided in the rails.

11. A system for monitoring the state of railways based on the analysis of resilient waves which are guided in the rails, the system comprising a plurality of electronic nodes, each one containing at least, embedded therein, one software program for analysis of resilient waves which are guided in the rails which can be updated in accordance with the steps of the method of any one of claims 1 to 7, and also comprising means for establishing a nominal low-speed long-range communication mode to transmit to a remote server messages in the "LoRa" format for fault diagnosis in the rails, and for establishing a temporary high-speed short-range communication mode for receiving software update data.
